(19) Europäisches Patentamt
European Patent Office
Office européen des brevets

(11) **EP 1 792 448 B1**

(12) **EUROPEAN PATENT SPECIFICATION**

(45) Date of publication and mention
of the grant of the patent:
**26.01.2011 Bulletin 2011/04**

(51) Int Cl.:
**H04L 12/58** (2006.01)

(21) Application number: **05777301.2**

(86) International application number:
**PCT/FI2005/000371**

(22) Date of filing: **29.08.2005**

(87) International publication number:
**WO 2006/027408 (16.03.2006 Gazette 2006/11)**

(54) **METHOD FOR THE FILTERING OF MESSAGES IN A COMMUNICATION NETWORK**

VERFAHREN ZUR FILTERUNG VON NACHRICHTEN IN EINEM KOMMUNIKATIONSNETZ

PROCEDE DE FILTRAGE DE MESSAGES DANS UN RESEAU DE COMMUNICATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **07.09.2004 FI 20041159**

(43) Date of publication of application:
**06.06.2007 Bulletin 2007/23**

(73) Proprietor: **Nokia Corporation
02150 Espoo (FI)**

(72) Inventor: **MIJATOVIC, Vladimir
FI-02660 Espoo (FI)**

(74) Representative: **Swindell & Pearson Limited
48 Friar Gate
Derby
DE1 1GY (GB)**

(56) References cited:
**EP-A- 1 139 608          EP-A- 1 326 189
WO-A1-2004/071035    US-A1- 2003 153 302
US-A1- 2003 204 568    US-A1- 2003 224 760
US-A1- 2004 019 651    US-A1- 2004 167 964
US-B1- 6 654 787**

**Description**

**BACKGROUND OF THE INVENTION**

Field of the invention:

The invention relates to messaging in a communication network. Particularly, the invention relates to the filtering of unwelcome messages in a communication network.

Description of the Related Art:

Nowadays unwelcome messages are becoming an increasingly significant problem for Internet and mobile communication network users. Users are being pestered with mass advertisements marketing inferior services and products in which the users have in most cases no interest. In most cases there exists no previous business relationship between the targeted user and the advertisers. Usually, the advertisers obtain user E-mail addresses from a variety of sources including arbitrary WWW-pages, chatrooms and newsgroups. In some cases advertisers randomly generate E-mail addresses by combining user names or random telephone numbers with company or Internet service provider domain names. Unwelcome E-mail messages are referred to with the generally used term spam. The sending of unsolicited commercial E-mail or generally any kind of repeating unwelcome E-mail is referred to with the generally used verb spamming. Unsolicited commercial messages sent via instant messaging are referred to with the term spim.

In order to deal with unwelcome messages a variety of measures have been proposed or attempted. The measures include legislative measures, the black-listing of spammer E-mail addresses, introducing a price for the sending of E-mail, introducing artificial delays in the sending of every E-mail message and filtering based on E-mail bodies and headers. The filtering is based in most simple cases on such methods as, for example, heuristic rules that depend upon pre-defined word searches from E-mail body, title and headers. Statistical filtering relying, for example, on naive Bayesian classifiers based on the presence of words, in other words tokens, is implemented so that the user trains the Bayesian network using E-mail message samples that include good, that is, welcome messages and spam. In prior art E-mail message filtering has been performed in E-mail clients.

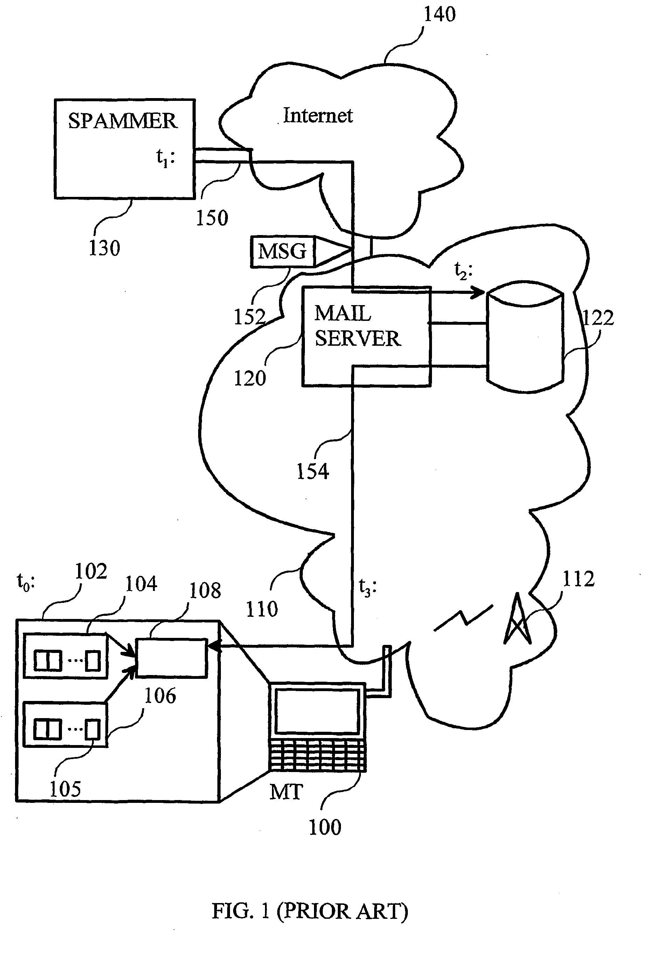

Reference is now made to Figure 1, which illustrates the filtering of E-mail messages using statistical classifiers in prior art. In Figure 1 there is a Mobile Terminal (MT) 100, which is communicating with a Base Transceiver Station (BTS) provided as a part of a mobile network 110. In association with the mobile network 110 is also an E-mail server 120, which comprises a mass memory 122, for example, a hard disk. E-mail server 120 comprises a number of E-mail folders associated with a number of users. Mobile network 110 is also connected to an external network 140, which is, for example, the Internet. To the external network is connected a node 130, which sends unwelcome messages to MT 100. MT 100 comprises an E-mail client 102, which stores a number of local folders comprising a number of E-mail messages. A part of the messages have been deemed by the user as good and part of the messages as spam. At time to, MT 100 already stores a number of E-mail messages such as message 105. The E-mail messages fall into two categories, that is, corpuses. A corpus 104 comprises good messages and a corpus 106 spam messages. Corpus 106 includes the messages that the user has deemed as spam using explicit feedback such as moving the message to a spam folder or by selecting a user interface command for making the message as spam. E-mail client 102 comprises also a statistical filter. At time to, MT 100 uses corpuses 104 and 106 to train the statistical filter. During the training the feature variable values for the statistical filter are adjusted to correspond to the user classification. A dichotomy between the E-mail message feature vectors associated with the two corpuses is formed. At time to, node 130 sends a spam E-mail message 152 towards the user associated with MT 100. The traversal of E-mail message 152 from node 130 to E-mail server 120 and its mass memory 122 is illustrated in Figure 1 with arrow 150. At time $t_2$, E-mail message 152 is stored to mass memory 122. At time $t_3$, the user on MT 100 starts retrieving E-mail messages to MT 100. Thereupon, also E-mail message 152 gets retrieved to E-mail client 102 in MT 100. E-mail client 102 provides E-mail message 152 to statistical filter 108 to be classified as either good or as spam.

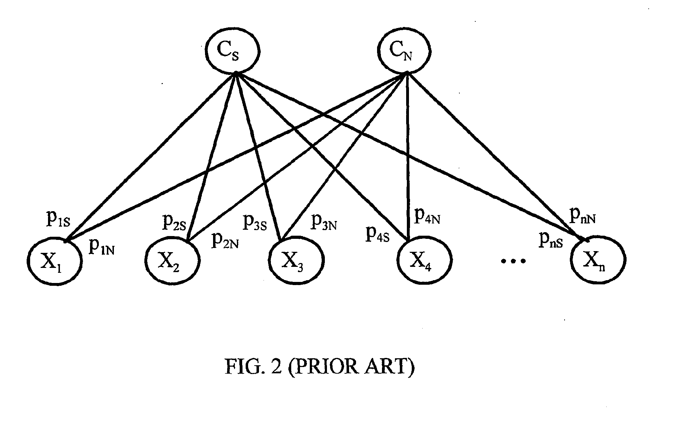

Reference is now made to Figure 2, which illustrates a Bayesian network used in naive Bayesian classification in prior art. In Figure 2 there are two nodes for classes $C_g$ and $C_s$. Class $C_g$ is for non-spam message, that is, good and welcomed messages, whereas class $C_s$ is for spam messages. There is a node $X_i$ for each feature, wherein $1 \leq i \leq n$ and n represents the total number of features. The features are typically tokens representing words appearing in messages. The words may be converted to a generic format where, for example, the word is converted to either upper or lower case and stemmed. The probability of class $c_k$ wherein $k \in \{g, s\}$ given an assignment $x_1, x_2, ..., x_n$ of values to the feature

variables $X_1, X_2, ..., X_n$ is obtained from the formula

$$P(C = c_k \mid X = x) = \frac{\prod_i P(X_i = x_i \mid C = c_k) P(C = c_k)}{P(X = x)}.$$

The edges $P_{ik}$ represent probabilities $P(X_i = x_i \mid C = c_k)$, wherein $k \in \{g, s\}$ and $1 \leq i \leq n$. In other words, the edges represent probabilities for spam or non-spam provided that a given token $X_i$ is present in a given E-mail message.

A problem associated with E-mail client based filtering as illustrated in Figure 1 is that in mobile terminals the cost and delay of downloading spam messages remains. The filtering in E-mail client 102 is insufficient. The problem associated with spam in mobile E-mail clients is much worse than in fixed E-mail clients since the cost of transporting the E-mail message data over the wireless link is higher. Usually, users will pay for every bit they transport over wireless medium. This is why spam is a particular annoyance for mobile terminal users. Another problem in prior art E-mail filtering is in that the statistical filtering requires huge token tables and thus consumes mobile terminal memory. Also huge token tables require significant processing capacity, which is not available in mobile terminals.

US 2004/0167964 discloses a system for filtering messages. The system includes a seed filter having associated therewith a false positive rate and a false negative rate. A new filter is also provided for filtering the messages, the new filter is evaluated according to the false positive rate and the false negative rate of the seed filter, the data used to determine the false positive rate and the false negative rate of the seed filter are utilized to determine a new false positive rate and a new false negative rate of the new filter as a function of threshold. The new filter is employed in lieu of the seed filter if a threshold exists for the new filter such that the new false positive rate and the new false negative rate are together considered better than the false positive and the false negative rate of the seed filter.

EP 1 326 189 discloses a system and methodology to enable a plurality of information associated with electronic messages to be automatically prioritized by a message urgency system for transmittal to a user or system. The message urgency system can employ classifiers that can be explicitly and/or implicitly trained to prioritize or triage one or more received messages according to a learned importance to the user. An adaptable and configurable graphical user interface is provided in order to manage the prioritized information. The interface facilitates system personalization according to user desires of how messages are received and subsequently processed by the user.

US 2003/0204568 discloses a system and method for access and response to Internet emails, from a wireless device. The system extracts the emails from multiple Internet email accounts and forwards them, on the basis of pre-defined filter settings of the user, to the user's wireless device. The filter settings comprise filter criteria for identifying whether a new mail is to be forwarded to the wireless device or not, and content selection criteria for identifying parts of the new email to be sent to the wireless device. The system also enables the user to reply to the emails in a transparent manner whereby the replied message from the wireless device appears to have originated from the email address. The system also enables the user to dynamically change the filter settings using multi-modal inputs from his/her wireless device.

US 2003/0153302 discloses a system for storing subscriber information in a centralized location that includes a processor, memory coupled to the processor and a data storage device coupled to the processor. The data storage device includes a subscriber profile portion for storing personal information about a subscriber. The subscriber profile portion includes a subscriber identification portion for storing an identification string. The subscriber profile portion is associated with an account type portion for storing account information, a portal portion for storing portal information, and an account status portion for storing account status information. The data storage device further includes a subscription portion for storing subscription information. The subscription portion is associated with a device portion for storing device information, a services portion for storing services information and a mobile subscription portion for storing mobile subscription information.

EP 1 139 608 discloses a method and system for providing configurable data services for mobile stations which allows mobile stations to select the type and content of data messages addressed to a mobile station. The method includes establishing an active profile associated with a corresponding mobile station. A wireless data server receives a data message addressed to the mobile station. The active profile for the mobile station is accessed to determine applicable stored profile attributes for the mobile station to which the received data message is addressed. The wireless data server detects received profile attributes associated with the received data message. Filtering is applied to the received data message in real-time based on a comparison between the detected profile attributes and the stored profile attributes.

US 6,554,787 discloses a server for filtering email messages. The server receives requests to retrieve email messages on behalf of a client and then retrieves email messages from a mail server on behalf of the client. The server then filters the email messages based on one or more rules and transfers the filtered email messages to the client. In addition, the server continues to filter the email messages after the client has disconnected from the server.

US 2003/0224760 discloses a system for communicating data to a mobile device. The system receives a request for data from a mobile device. The system identifies filter criteria associated with the mobile device. The filter criteria is applied to a set of data to identify particular data elements that satisfy the filter criteria. The identified data elements are then transmitted to the mobile device.

WO 2004/071035 discloses a system and method for dynamic server-based filtering that selectively deletes or delivers received messages or summary information therefore, based upon the characteristics of the received messages and the filtering rules implemented by the server. A server receives electronic messages addressed to a client and applies a set of filtering rules to the messages to categorize them into groups of wanted, unwanted, and preview messages. Wanted messages are delivered in their entirety without further input. Unwanted messages are deleted without further input. Summary information is delivered for preview messages. A user provides feedback indicating that the corresponding message should be delivered in its entirety, or deleted. The deliver or delete decision can be applied to one message, or to all similar messages. The server takes action according to the feedback, updates its filtering rules and credits the user's account, as appropriate.

US 2004/0019651 discloses a system for categorizing electronic messages based on collaborative feedback from a number of electronic message recipients. An electronic message that has particular characteristics is received. Electronic message recipients can provide express feedback to a collaborative filter module indicating that the received electronic message is an unwanted electronic message. When the level of express feedback exceeds a specified threshold, the collaborative filter module may automatically categorize the electronic message as unwanted for other recipients that have not yet accessed the electronic message.

## SUMMARY OF THE INVENTION:

The present invention is as set out in the independent claims.

One embodiment of the invention relates to a method for the filtering of messages in a communication network comprising at least a messaging server and a wireless node. In the method first filtering criteria is stored in the messaging server; a first message is received in the messaging server; it is determined whether the first message passes the first filtering criteria in the messaging server; information on the first message is retrieved to the wireless node; a user is allowed to determine whether the first message is spam; a feedback message identifying the first message is provided to the messaging server; and second filtering criteria based on the first filtering criteria and the feedback message is determined.

Another embodiment of the invention relates also to a system comprising at least a messaging server and a wireless node, the system further comprising: a filtering entity in the messaging server configured to store first filtering criteria, to determine whether a first message is spam, and to determine second filtering criteria based on the first filtering criteria and a feedback message; a messaging entity in the messaging server configured to receive the first message, to provide information on the first message to the wireless node and to receive a feedback message from the wireless node; and a messaging client in the wireless node configured to retrieve information on the first message from the messaging entity, to allow a user to determine whether the first message is spam, and to provide the feedback message to the messaging entity.

Another embodiment of the invention relates also to a messaging server comprising: a filtering entity configured to store first filtering criteria, to determine whether a first message is spam, and to determine second filtering criteria based on the first filtering criteria and a feedback message; and a messaging entity configured to receive the first message, to provide information on the first message to the wireless node and to receive a feedback message from a wireless node.

A further embodiment of the invention relates also to a computer program comprising code adapted to perform the following steps when executed on a data-processing system: storing first filtering criteria in a messaging server; receiving a first message in the messaging server; determining whether the first message passes the first filtering criteria in the messaging server; providing information on the first message to the wireless node; receiving a feedback message identifying the first message to the messaging server; and determining second filtering criteria based on the first filtering criteria and the feedback message.

In one embodiment of the invention, the allowing of the user to determine whether the first message is spam is achieved so that the user is provided with a list of message identification data comprising at least the first message. From the list the user selects the first message and marks it as spam using a browsing entity in the wireless node. The user may also decide to download the entire first message and to read it. If the first message is marked by the user as spam, a feedback message is sent from a browsing entity in the wireless node to the messaging entity in the messaging server. The absence of feedback is interpreted so that there is no need to update the filtering criteria.

In one embodiment of the invention, the filtering criteria comprise a sender whitelist. The sender whitelist is formed, for example, using feedback messages received from a messaging client in the wireless node. The feedback message is sent in response to the user selecting an option in a message browsing entity for adding the sender to the list of senders from which all messages are always let through. The option may be manually selected by the user while receiving a message from the sender or automatically when the user herself sends a message to that sender using the message browsing entity.

In one embodiment of the invention, the filtering criteria comprise a statistical filter. In one embodiment of the invention, the statistical filter comprises a Bayesian classifier, for example, a naive Bayesian classifier. The filtering criteria are used by a filtering entity in the messaging server.

In one embodiment of the invention, the first message is checked by the filtering entity for the presence of at least one feature associated with the first filtering criteria, each said at least one feature being at least one of a token and a heuristic rule; the probability for the first message being spam is computed by the filtering entity based on the presence of at least one of the at least one feature; and the probability is compared by the filtering entity to a predefined threshold value.

In one embodiment of the invention, the heuristic rule comprises the finding of at least one character sequence in the first message by the filtering entity. In other words, checking the first message for the presence of a heuristic rule comprises the finding of at least one character sequence in said first message. Thus, the filtering entity is configured to find at least one character sequence in the first message in order to check the presence of at least one of the at least one feature. In this case the feature, the presence of which is checked, is a heuristic rule. In one embodiment of the invention, the heuristic rule comprises the finding of at least a predefined number of predefined special characters in the first message. In one embodiment of the invention, the character sequence is a markup language element. The markup language element may be, for example, a Hypertext Markup Language Tag. The element may also comprise a number of sub-elements. In one embodiment of the invention, the heuristic rule comprises the parsing of a structured markup language element within the first message and the finding of predefined attributes and attribute values within the markup language element. The structured markup language element may be, for example, an Extensible Markup Language (XML) element. The parsing and finding steps are performed by the filtering entity.

In one embodiment of the invention, the wireless node comprises a mobile station, that is, a Mobile Terminal (MT).

In one embodiment of the invention, the communication network comprises a Universal Mobile Telecommunications System (UMTS) network.

In one embodiment of the invention, the communication network comprises a General Packet Radio System (GPRS) network.

In one embodiment of the invention, the message is an electronic mail message. In one embodiment of the invention, the message is a Multimedia Messaging Service (MMS) message.

In one embodiment of the invention, the feedback message comprises the first message. In one embodiment of the invention, the feedback message comprises at least one header from the first message. In one embodiment of the invention, the feedback message comprises at least a unique identifier assigned for the first message.

In one embodiment of the invention, the messaging client comprises an application within the wireless node.

In one embodiment of the invention, the wireless node is a SYMBIAN™ operating system device. The wireless node may be a General Packet Radio Service (GPRS) terminal or a Universal Mobile Telecommunications (UMTS) terminal.

In one embodiment of the invention the wireless node has a graphical user interface and the browsing entity is operated via at least one window. The graphical user interface may be based on, for example, SYMBIAN™ operating system, Microsoft WINDOWS™ or other operating system.

In one embodiment of the invention, the computer program is stored on a computer readable medium. The computer readable medium may be a removable memory card, magnetic disk, optical disk or magnetic tape.

In one embodiment of the invention, the wireless node is a mobile device, for example, a laptop computer, palmtop computer, mobile terminal or a personal digital assistant (PDA).

The benefits of the invention are related to the improved efficiency of filtering unwelcome messages. The user will have the filtering criteria tailored to her individual flavor of messages. She will be able to update the filter to be more accurate. A further benefit of the invention is that the invention avoids the disadvantages of performing the filtering of messages in the wireless node. The user is no longer required to wait for the downloading of unwelcome spam messages. The cost for the downloading of unwelcome junk mail and unsolicited messages is also avoided. The spammers will no longer have incentive to send spam to the users of the communication network.

## BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:

**Fig. 1** is a block diagram illustrating the filtering of unwelcome E-mail messages in prior art;

**Fig. 2** illustrates a Bayesian network for classifying E-mail messages as good or spam in prior art;
**Fig. 3** is a block diagram illustrating a communication network that performs the filtering of unwelcome messages according to the invention;
**Fig. 4** is a block diagram illustrating the structure of the user data used in the filtering of unwelcome messages in one embodiment of the invention; and
**Fig. 5** is a flow chart depicting one embodiment of a method for the filtering of unwelcome messages in a communication network..

## DETAILED DESCRIPTION OF THE EMBODIMENTS:

Reference will now be made in detail to the embodiments of the present invention, examples of which are illustrated in the accompanying drawings.

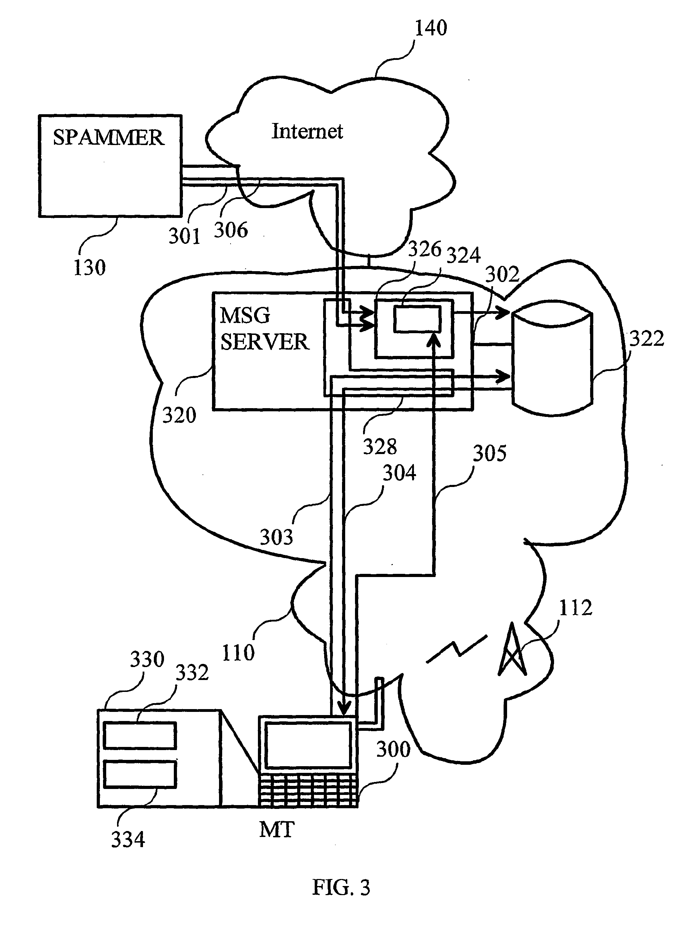

Figure 3 illustrates a communication network that performs the filtering of unwelcome messages according to the invention. The communication network comprises at least a mobile network 110. In Figure 3 there is a Mobile Terminal (MT) 300, which is communicating with a Base Transceiver Station (BTS) provided as a part of mobile network 110. In association with the mobile network 110 is also a messaging server 320, which comprises a mass memory 322, for example, a hard disk. Messaging server 320 also comprises a messaging entity 326, which performs, for example, tasks related to the reception, storing and retrieving of messages for a number of users in mobile network 110. In association with messaging entity 326 there is also a message filtering entity, which performs the filtering of unwelcome messages according to the invention. Messaging server 320 comprises also a communication entity 328, which comprises functions related to communication protocols that are used to communicate with mobile terminals within mobile network 110 and with an external network 140. An example of a protocol used to communicate between messaging servers is Simple Mail Transfer Protocol (SMTP). Examples of protocol used to communicate between messaging server 320 and MT 300 include Internet Mail Access Protocol (IMAP) and Post Office Protocol (POP). The protocol used to communicate between messaging server 320 and MT 300 may also be based on browsing and use, for example, Hypertext Transfer Protocol (HTTP) or Wireless Application Protocol (WAP).

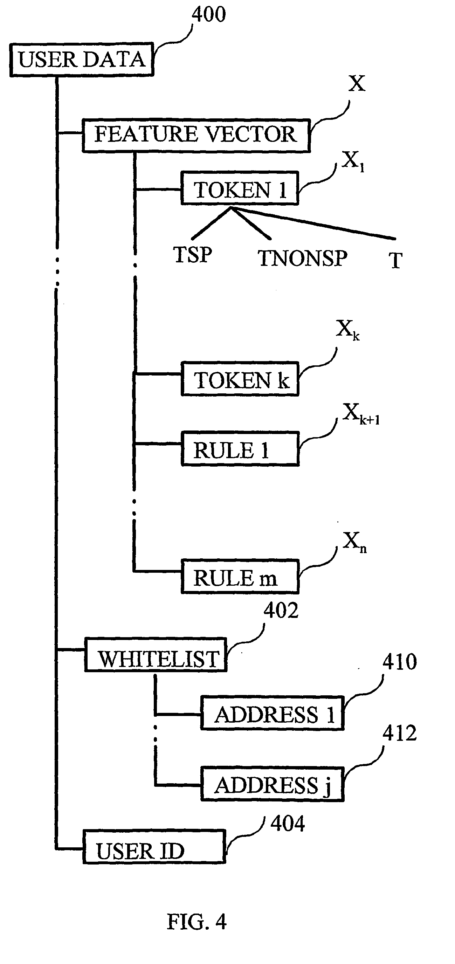

Messaging entity 326 also comprises a filtering entity 324, which performs the classification of incoming messages as good or spam and allows always through messages from particular users marked to a whitelist. The filtering entity 324 bases the filtering decision on user data, which is at least partly user specific. The structure of user data is illustrated in association with Figure 4.

In one embodiment of the invention, communication entity 328 performs the translation of messages between the message format used in messaging entity 326 and the message formats used to receive messages from other messaging servers and to the message formats used to retrieve messages to MT 300. In one embodiment of the invention, the messaging server 320 stores messages associated with a given user in at least one folder. There may be, for example, folders for incoming and outgoing messages. Mobile network 110 is also connected to external network 140, which is, for example, the Internet. To the external network is connected a node 130, which sends unwelcome messages, for example, spam to MT 300.

MT 300 comprises a messaging client 330, which stores and retrieves messages associated with the user of MT 300 or multiple users using MT 300. Messaging client comprises a message browsing entity 332 and a feedback entity 334, which is used to provide feedback information to filtering entity 324 as to whether or not a given message is to be classified as good or spam. The feedback entity also provides information on users, which are to be added to a whitelist stored by filtering entity 324.

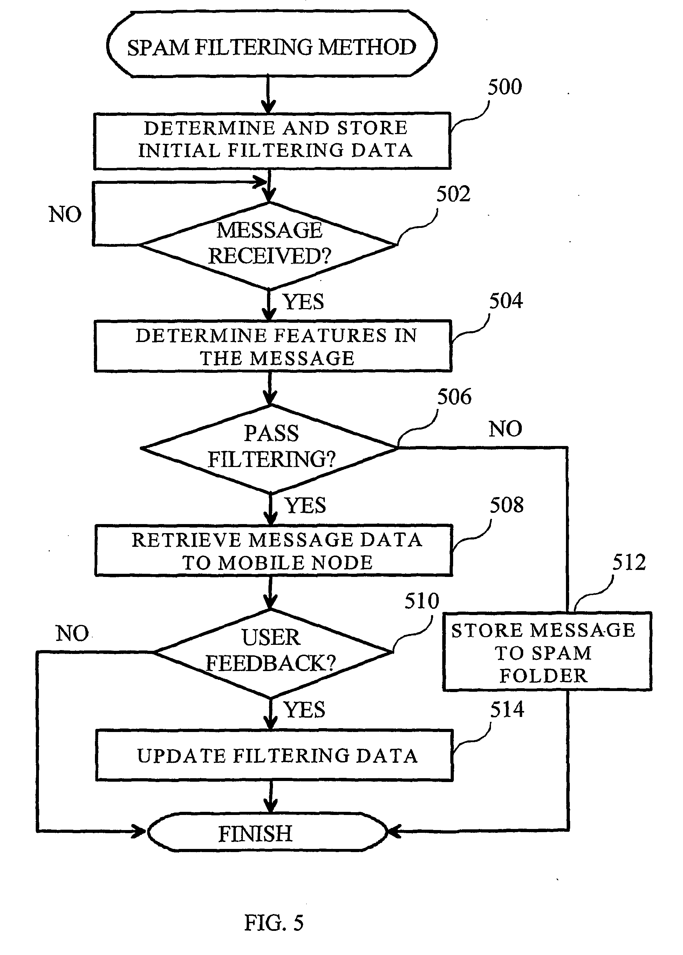

Figure 5 is a flow chart depicting one embodiment of a method for the filtering of unwelcome messages in a communication network as illustrated in Figure 3.

At step 500 initial filtering data is determined. The initial filtering data is formed, for example, by analyzing two corpuses of messages, one for good messages and one for spam. The two corpuses comprise each at least one message. The corpuses comprise, for example, a sample of recently received spam messages and a sample of typical good messages. The initial filtering data comprises, for example, information for forming a naive Bayesian classifier network as illustrated in Figure 2. The n features and the $P_{ik}$ edge values are determined. The edges connecting class nodes and feature nodes $P_{ik}$ represent probabilities $P(X_i = x_i \mid C = c_k)$, wherein $k \in \{g,s\}$, $1 \leq i \leq n$ and g stands for the good message class and s for the spam message class. In other words, the edges represent probabilities for spam or non-spam provided that a given feature $X_i$ is present in a given E-mail message. Each feature is, for example, a token or a heuristic rule. A token is a word, a combination of words or a combination of words and special characters appearing in the message. It should be noted that in this context a word is not always strictly a dictionary word, but all character sequences delimited using space or other delimiting characters may be handled as words. Also an indication on the part of the message a word appeared in may be added to the word. This means that the word is appended to a character sequence such as "header" or "body" that indicates the part. In this way the original word is used to form two different new words depending on the part.

The heuristic rules comprise, for example, the searching of a message for at least one lexical symbol comprising at least one character. The evaluation of the heuristic rule returns either the Boolean value true or false, depending on whether the at least one lexical symbol is present or not. If the heuristic rule evaluates to true the feature $X_i$ corresponding to the heuristic rule is considered to be present in a message. Respectively, if the heuristic rule evaluates to false the feature $X_i$ corresponding to the heuristic rule is considered not to be present in a message. The lexical symbols may be, for example, a given markup language tag or a particular combination of such tags. During the forming of initial filtering data also the numbers of good and spam messages are counted. Thereupon, the initial filtering data is stored in the user data for at least one user and filtering entity 324 is ready to start filtering messages using that user data.

In one embodiment of the invention, the initial filtering criteria are empty, which means that there are no feature nodes in the Bayesian network. The feature nodes are only created as soon as messages are received and classified by the user as explained in associated with the rest of the method steps. In one embodiment of the invention there are feature nodes, but the probabilities $P_{ik}$ are set to an initial value such as 0.5.

At step 502 the messaging entity 326 is waiting for a message targeted for a user in MT 300. As long as there is no message received, the method continues in step 502. When a spammer sends a message by means of server 130, a first message is received via external network 140 to message server 320. The message is illustrated in Figure 3 with arrow 301. An incoming message for message server 320 is first handled in communication entity 328, which provides the message to messaging entity 326. When messaging entity 326 has received the message, the method continues at step 504.

At step 504 messaging entity 326 provides the message for filtering entity 324, which performs filtering-related tasks for the message. The filtering entity 324 checks the message for the presence of any of the tokens. This comprises, for example, that each word extracted from the message is converted to a generic grammatical form. Thereupon, it is determined whether any of the words in the generic grammatical form is a token. Also the fulfilling of heuristic rules is checked for each heuristic rule. The subset of tokens present in the message is determined. In one embodiment of the invention, the subset of tokens present in a given received message and the Boolean values obtained in rule evaluation for heuristic rules for the message are recorded in a cache list by filtering entity 324 together with identifier fields uniquely identifying the message such as, for example, the sender, the receiver and a unique message identity. For each feature that is present in the message the filtering entity 324 computes the probabilities of the message being good or spam, provided the presence of the feature. In one embodiment of the invention, filtering entity 324 selects the most significantfeatures, which have the probabilities furthest from 0.5. Features not present in the message are assigned, for example, the probability 0.5. Thereupon, filtering entity 324 computes the overall probabilities of the message belonging to good and spam categories. Comparing the probabilities with a threshold probability the message is assigned to good or spam class. Finally, filtering entity 324 checks whether the sender of the message is in the user data whitelist. If the sender was in the whitelist, the message originating from that sender is in any case deemed to belong to the good class. Information on the class determined by filtering entity 324 for the message is provided to messaging entity 326.

At step 506 it is checked by messaging entity 326 whether the message received by it passed filtering. If the message passed filtering, that is, it was classified as good, the method continues at step 508. If the message was classified as spam, the method continues at step 512. In this case it is assumed that the first message illustrated in Figure 3 with arrow 301 passes the filtering and is classified as good. This is due to, for example, an unusual wording, which has not previously been largely used in the spam messages used for forming the initial filtering criteria.

At step 508 the user of MT 300 decides to start downloading messages to messaging client 330. The decision is, for example, due to a notification from messaging entity 326 to messaging client 330, which informs the user that new messages have arrived for the user. The user starts browsing entity 332, which is used to browse her messages. As illustrated with arrow 303 in Figure 3 a message download request is sent to messaging server 320. However, it should be noted that there might be multiple download requests issued by the user via the browsing entity 332, for example, one for the list of messages stored in the folder of incoming messages and one for each message selected by the user for reading from that list. Eventually, in response to the message download request sent by the user via browsing entity 332, the first message is delivered to MT 300 as illustrated with arrow 304 in Figure 3. The first message is handled by messaging client 330 wherein it is displayed to the user using browsing entity 332.

In one embodiment of the invention, the first message is not necessarily downloaded to MT 300. Instead, the user selects the first message directly from the list of new messages that is downloaded to browsing entity 332 and marks the message as spam or good. The list of new messages comprises message identification data, which is sufficient to identify the first message for messaging entity 326 when feedback message is to be sent from browsing entity 332 to messaging entity 326. Therefore, arrow 304 in Figure 3 may also merely illustrate the downloading of the list of new messages arrived.

In one embodiment of the invention, no separate downloading request is required from the user to start the forwarding of messages from messaging entity 326 to messaging client 330. Instead, messages are automatically forwarded by messaging entity 326 to messaging client 330.

At step 510 messaging entity 326 waits if there is a feedback message received from the user. If there is no feedback and, for example, the user closes the message download session between message client 330 and messaging entity 326, the method is finished in one embodiment of the invention. However, it should be noted that, in one embodiment of the invention, the user might provide a feedback message for the first message during a later message browsing session. If the user decides to mark a received message as spam or decides to mark a particular sender to the whitelist, the user selects an option from the user interface in browsing entity 332. There may be, for example, a first option marked as "mark as spam" and a second option marked as "always let through". In one embodiment of the invention, there is also a third option for marking a message as good. If the user selects the first, the second or the third option, a feedback message is sent by feedback entity 334 in message client 330 towards messaging entity 326, in response to the instruction from browsing entity 334. The feedback message is illustrated in Figure 3 with arrow 305. If a feedback message is received by messaging entity 326, the method continues at step 514.

In one embodiment of the invention, messaging entity 326 does not explicitly wait for a feedback message associated with any of the messages that have been downloaded in the previous step such as the first message illustrated with arrow 304 in Figure 3. Instead, messaging entity 326 is prepared to processes any kind of feedback message, which is sufficient to obtain the content of the message, to which the feedback is associated. The message to which the feedback is associated may not even have been delivered via messaging entity 326, but may have been obtained otherwise to browsing entity 334 such as via another messaging entity, manual entry by the user or via uploading from a memory medium associated with MT 300, for example, a flash memory card or a diskette. If the message have been delivered via messaging entity 326, the content of the message may be obtained, for example, so that messaging client 330 specifies at least one identifier to access a message being stored in messaging server 320 or so that messaging client provides the message contents along the feedback message.

At step 514 the filtering criteria associated with the user that sent the feedback message are updated. The filtering criteria are comprised in a user data structure such as defined in association with Figure 4. If the feedback message specifies that the sender of the message must be added to the whitelist, that is, the user selected the second option, a whitelist entry is added to the user data. The new whitelist entry comprises the messaging address for the sender, for example, an E-mail address. If the user selected the first option, the statistical filtering has to be adjusted using features determined from the message that the feedback was related to. Filtering entity 324 using message identification information provided in the feedback message inspects the cache list. The set of tokens present and heuristic rule Boolean values are thus obtained from the cache list. Thereupon, the probabilities $P_{ik}$ are recomputed by considering the new message as part of the corpus of spam messages. The corpus of the good messages is the previous one. In one embodiment of the invention, the re-computation of probabilities involves that token attributes for the tokens present in the message are updated considering the message as spam, the total number messages in the corpuses is updated and the total number of messages is incremented. The corpus of the good messages is the previous one. Thereupon, the probabilities are computed as described in associated with the Figure 4.

In one embodiment of the invention, the filtering criteria are updated periodically as a predefined number of new good messages are received and for which no feedback indicating that the messages were spam is received from the user. The absence of user feedback is determined so that within a given number of message downloading sessions or within a given timeframe, no feedback is received on the messages. The statistical filtering has to be adjusted using features determined from the new messages. The new messages are considered as belonging to the good category while adjusting the filtering criteria.

At step 512 a message that has not passed the filtering performed by filtering entity 324 is handled. The message is stored, for example, to a particular message folder maintained by messaging entity 326 in messaging server 320 mass memory 322. The message folder is, for example, named "spam" and used for spam messages. In one embodiment of the invention, the message that has not passed filtering is deleted by messaging entity 326 directly without further processing. In one embodiment of the invention, the user may browse the spam message folder using browsing entity 332. The user may select any of the messages in the spam folder and select from the browsing entity 326 user interface an option, which is for marking a spam message as good. When the message is selected as good the statistical filtering has to be adjusted using features determined from the message that the feedback was related to. Filtering entity 324 determines the set of tokens present and heuristic rule Boolean values. The tokens present and the heuristic rule Boolean values are either obtained from the cache list or by reanalyzing the raw message data, in other words, message source data. Thereupon, the probabilities $P_{ik}$ are recomputed by considering the message as part of the corpus of good messages. In one embodiment of the invention, the re-computation of probabilities involves that token attributes for the tokens present in the messages are updated considering the message as good, the total number messages in the corpuses is updated and the total number.of messages is incremented. The corpus of the spam messages is the previous one. Thereupon, the probabilities are computed as described in associated with the Figure 4.

In one embodiment of the invention, the feedback message comprises the uploading of a number of good and spam messages, which are added to the corpuses of good and spam messages depending on user classification information associated with the messages. The new added messages are analyzed as in step 500 in the forming of initial filtering criteria. Thereafter, the probabilities associated with the naive Bayesian classifier network are recomputed by taking the numbers of new messages in good and spam categories into account.

Figure 4 is a block diagram illustrating the structure of the user data used in the filtering of unwelcome messages in one embodiment of the invention. Filtering entity 324 uses user data, which is stored, for example, to messaging server 320 mass memory 322. The user In Figure 4 there is a user data structure 400, which comprises a number of bytes arranged in a number of elements. The first element, namely element X, is a feature vector. Feature vector X comprises a number n of features. Each feature $X_i$ wherein $1 \leq i \leq n$ is a token or a rule. In Figure 4 first k features are tokens and the features k+1, k+2, ..., n are rules. Associated with tokens, namely features 1, ..., k there are at least three token counts. Token count TSP represents the total number of occurrences of a given token in the spam message corpus, token count TNONSP represents the total number of occurrences of the token in the good message corpus and T represents the total number of occurrences of the token. Using these token counts the probabilities

$$P(X_i = x_i \mid C = c_s) = \frac{TSP_i}{T_i} \quad \text{and} \quad P(X_i = x_i \mid C = c_g) = \frac{TNONSP_i}{T_i}$$ may be computed by the filtering entity 324 for a given token feature $X_i$. Using these two probabilities the probability

$$P(C = c_s \mid X_i = x_i) = \frac{P(X_i = x_i \mid C = c_s)P(S)}{P(X_i = x_i \mid C = c_s)P(S) + P(X_i = x_i \mid C = c_g)P(G)} \, ,$$

wherein P(S) is equal to the number of spam messages divided by the total number of messages and P(G) is equal to the number of good messages divided by the total number of messages. For heuristic rule features, the probabilities may be assigned, for example, by dividing the number of spam and good messages satisfying the rule, that is, the message wherein the rule evaluates to Boolean value true, respectively by the total number of messages. Further, associated with user data 400 there is also a whitelist 402, which comprises zero or more sender addresses. If there are no sender addresses whitelist 402 may be omitted from user data 400. A sender address is, for example, an E-mail address. In Figure 4 there are addresses 1,..., j wherein j is an arbitrary integer. Sender address 1 is referred to as element 410 and sender address j is referred to as element 412. In association with user data there is also a user identification data 404, which comprises the user's messaging address, for example, an E-mail address.

Next one embodiment of the invention is described wherein the invention is used to filter spam E-mail messages. There is a user referred to as user A - the user that uses individual mail filtering. The E-mail, that is, the messaging client is an E-mail reader (a client in the user A's mobile device). The messaging server is an E-mail server in the mobile network operator's network.

E-mail server is the mobile email server, which is placed into the operator's network. Please note that it is not absolutely necessary that the E-mail server is integrated strictly speaking into the operator's network domain, it could be also in the corporate domain or anywhere else.

Tied to the E-mail server is the spam filter, that could have individual user's settings, as well as some common spam filtering settings. Spam filter reside in the network.

E-mail client resides in the mobile device. E-mail client has enhancements that allow it to update the individual spam filter on the network side. Updates may be done using any bearer, for example, Hypertext Transfer Protocol (HTTP), Session Initiation Protocol (SIP), Wireless Application Protocol (WAP), Short Message Service (SMS) or any other.

When user A receives E-mail it can screen headers only, or it can download all email. The goal of the user A (and his service provider) is to reduce the number of spam, because it brings the costs to the end-user.

When reading E-mail subscriber A will check the new email. If the email is good, that is, non-spam, user A will do no further action. Alternatively, if the sender is particularly important to user A, she may decide to "whitelist" that particular sender. User A goes to "options" in the mobile terminal user interface and selects "always let through E-mail from this sender" (or similar) and that particular sender is whitelisted. All emails from that sender will not be filtered, but will pass through automatically.

Next the marking of a particular E-mail as spam is described. If particular email is spam, user A will go to "options" and "mark as spam". The application will send an update to E-mail filter. Spam filter will take that particular message and update its user A's spam filter characteristics. In case of Bayesian filters, that means that words (tokens) from that particular E-mail will be added into spam mail token table.

When new E-mail arrives, filter will take into account new (updated) filtering tables for that individual subscriber.

Next the marking of a particular E-mail as non-spam is described. User is also able to view the headers (or all E-mails) of mails that have been filtered as spam. If user A wants to check the content of his spam folder (to see if some mail has ended there by mistake), he can do so. If one particular mail is not spam, and ended in spam-folder by mistake, user A goes to "options" and "this is not spam". The application will send an update to E-mail filter. Spam filter will take that particular message and update its user A spam filter characteristics. In case of Bayesian filters, that means that words (tokens) from that particular E-mail will be added into non-spam mail token table. It is important to note here that every time that user A classifies his email the filter will become more accurate.

Server will delete incoming E-mail for user A based on learned properties of A's own spam and non-spam mail. The properties are kept in tables (for Bayesian filtering). The similar principle may be applied for any filter principle. User updates tables on server side by classifying his own E-mail as "spam" or whitelists sender. Server's filters will learn properties from the whole email body and headers. There may be some generic training sequence for filters, to improve the initial filtering criteria. Filter's threshold may be e.g. lower at the beginning (to allow less false positives, that is, good messages classified as spam), while threshold is increased gradually when user A is actually starting to classify E-mail. Because filters in server will know more about individual properties, the flavor, of user A's E-mail, the filtering will be more precise, and threshold may be raised.

It is obvious to a person skilled in the art that with the advancement of technology, the basic idea of the invention may be implemented in various ways. The invention and its embodiments are thus not limited to the examples described above; instead they may vary within the scope of the claims.

## Claims

1.  A method comprising:

    storing first filtering criteria in at least one messaging server (320);
    receiving a plurality of messages at said at least one messaging server (320);
    determining whether each of said plurality of messages passes said first filtering criteria in said at least one messaging server (320);
    transmitting information on each message passing said first filtering criteria;
    receiving at least one feedback message identifying at least one message passing said first filtering criteria at said at least one messaging server (320);
    determining second filtering criteria based on said first filtering criteria and said feedback message; and further determining said second filtering criteria based on an absence of receiving a feedback message identifying a message passing said first filtering criteria.

2.  The method according to claim 1, wherein said absence of receiving said feedback message identifying said message passing said first filtering criteria is determined based on an absence of receiving said feedback message within a given timeframe.

3.  The method according to claim 1, wherein said absence of receiving said feedback message identifying said message passing said first filtering criteria is determined based on an absence of receiving said feedback message following a pre-determined number of transmissions of information on messages passing said first filtering criteria for which no feedback messages are received.

4.  The method according to claim 1, wherein said determining the second filtering criteria comprises determining a sender whitelist in the at least one messaging server (320).

5.  The method according to claim 1, wherein said storing comprises storing a statistical filter in the at least one messaging server (320).

6.  The method according to claim 5, wherein said statistical filter comprises a Bayesian classifier.

7.  The method according to claim 5, the method further comprising:

    checking at least one of said plurality of messages for the presence of at least one feature associated with said first filtering criteria, each of said at least one feature being at least one of a token and a heuristic rule;
    computing a probability for at least one of said plurality of messages being spam based on the presence of at least one of said at least one feature; and
    comparing said probability to a predefined threshold value.

8.  The method according to claim 7, wherein said checking at least one of said plurality of messages for the presence of a heuristic rule comprises the finding of at least one character sequence in at least one of said plurality of messages.

9. The method according to claim 8, wherein said character sequence is a markup language element.

10. The method according to claim 1, wherein said transmitting comprises transmitting information on each message passing said first filtering criteria to a mobile station (300).

11. The method according to claim 1, wherein the method is for filtering of messages in a communication network (110) and wherein said communication network (110) comprises:

   a Universal Mobile Telecommunications System network, or
   a General Packet Radio System network.

12. The method according to claim 1, wherein said receiving comprises receiving:

   an electronic mail message, or
   a Multimedia Messaging Service message.

13. The method according to claim 1, wherein said receiving comprises receiving:

   said at least one feedback message comprising said at least one message passing said first filtering criteria, or
   at least one header from said at least one message passing said first filtering criteria.

14. A messaging server (320), comprising:

   storing means (322) for storing first filtering criteria;
   receiving means (328) for receiving a plurality of messages;
   determining means (326) for determining whether each of said plurality of messages passes said first filtering criteria;
   transmitting means (328) for transmitting information on each message passing said first filtering criteria;
   receiving means (328) for receiving at least one feedback message identifying at least one message passing said first filtering criteria;
   determining means (326) for determining second filtering criteria based on said first filtering criteria and said feedback message; and wherein
   said determining means (326) are configured to determine said second filtering based on an absence of receiving a feedback message identifying a message passing said first filtering criteria.

15. The messaging server (320) according to claim 14, wherein said absence of receiving said feedback message identifying said message passing said first filtering criteria is determined based on an absence of receiving said feedback message within a given timeframe.

16. The messaging server (320) according to claim 14, wherein said absence of receiving said feedback message identifying said message passing said first filtering criteria is determined based on an absence of receiving said feedback message following a pre-determined number of transmissions of information on messages passing said first filtering criteria for which no feedback messages are received.

17. The messaging server (320) according to claim 14, wherein said filtering criteria comprise a sender whitelist.

18. The messaging server (320) according to claim 14, wherein said filtering criteria comprise a statistical filter.

19. The messaging server (320) according to claim 14, wherein said statistical filter is a Bayesian classifier.

20. The messaging server (320) according to claim 18, further comprising: a filtering entity (324) in said at least one messaging server (320) configured to check at least one of said plurality of messages for a presence of at least one feature associated with said first filtering criteria, each of said at least one feature being at least one of a token and a heuristic rule, to compute a probability for at least one of said plurality of messages being spam based on the presence of at least one of said at least one feature and to compare said probability to a predefined threshold value.

21. The messaging server (320) according to claim 20, wherein said filtering entity (324) is configured to find at least one character sequence in at least one of said plurality of messages in order to check the presence of at least one of said at least one feature.

22. The messaging server (320) according to claim 21, wherein said at least one character sequence is a markup language element.

23. The messaging server (320) according to claim 14, wherein said transmitting means (328) is configured to transmit information on each message passing said first filtering criteria to at least one wireless node (300).

24. The messaging server (320) according to claim 23, wherein the at least one wireless node (300) is a mobile station.

25. The messaging server (320) according to claim 14, wherein the messaging server (320) is for filtering of messages in a communication network (100) and wherein said communication network (110) comprises:

   a Universal Mobile Telecommunications System network, or
   a General Packet Radio System network.

26. The messaging server (320) according to claim 14, wherein at least one of said plurality of messages is:

   an electronic mail message, or
   a Multimedia Messaging Service message.

27. The messaging server (320) according to claim 14, wherein said at least one feedback message comprises said at least one message passing said first filtering criteria.

28. The messaging server (320) according to claim 14, wherein said at least one feedback message comprises at least one header from said at least one message passing said first criteria.

29. A computer program stored on a computer readable medium comprising code configured to perform, when executed on a data-processing system (320), all the method steps of any of claims 1 to 13.

30. The computer program according to claim 29, wherein said computer readable medium is:

   a removable memory card, or
   a magnetic or an optical disk.

31. A communication network comprising:

   a messaging server (320) as claimed in any of claims 14 to 28 and at least one wireless node (110).

32. A communication network as claimed in claim 31, comprising a messaging client (330) in said at least one wireless node (110) configured to retrieve information on said each message passing said first filtering criteria from a messaging entity (326) of the messaging server (320), to allow a user to determine whether said at least one message passing said first filtering criteria is spam, and to provide said at least one feedback message to said messaging entity (326).

**Patentansprüche**

1. Verfahren, umfassend:

   Speichern von ersten Filterkriterien in mindestens einem Nachrichtenserver (320);
   Empfangen einer Vielzahl von Nachrichten an dem mindestens einen Nachrichtenserver (320);
   Bestimmen, ob jede aus der Vielzahl von Nachrichten die ersten Filterkriterien erfüllt, in dem mindestens einen Nachrichtenserver (320);
   Übertragen von Informationen über jede Nachricht, die die ersten Filterkriterien erfüllt;
   Empfangen von mindestens einer Rückmeldungsnachricht, die mindestens eine Nachricht angibt, welche die ersten Filterkriterien erfüllt, an dem mindestens einen Nachrichtenserver (320);
Bestimmen von zweiten Filterkriterien basierend auf den ersten Filterkriterien und der Rückmeldungsnachricht; und weiter
Bestimmen der zweiten Filterkriterien basierend auf einer Abwesenheit des Empfangs einer Rückmeldungsnachricht, die eine Nachricht angibt, welche die ersten Filterkriterien erfüllt.

2. Verfahren nach Anspruch 1, wobei die Abwesenheit des Empfangs der Rückmeldungsnachricht, die die Nachricht angibt, welche die ersten Filterkriterien erfüllt, basierend auf der Abwesenheit des Empfangs innerhalb einer vorgegebenen Zeitspanne bestimmt wird.

3. Verfahren nach Anspruch 1, wobei die Abwesenheit des Empfangs der Rückmeldungsnachricht, die die Nachricht angibt, welche die ersten Filterkriterien erfüllt, bestimmt wird basierend auf der Abwesenheit des Empfangs der Rückmeldungsnachricht nach einer vorbestimmten Anzahl von Übertragungen von Informationen über Nachrichten, die die ersten Filterkriterien erfüllen, für die keine Rückmeldungsnachrichten empfangen wurden.

4. Verfahren nach Anspruch 1, wobei das Bestimmen der zweiten Filterkriterien das Bestimmen einer Sender-Positivliste in dem mindestens einen Nachrichtenserver (320) umfasst.

5. Verfahren nach Anspruch 1, wobei das Speichern das Speichern eines statistischen Filters in dem mindestens einen Nachrichtenserver (320) umfasst.

6. Verfahren nach Anspruch 5, wobei der statistische Filter einen Bayes-Klassifikator umfasst.

7. Verfahren nach Anspruch 5, wobei das Verfahren weiter umfasst:

   Überprüfen mindestens einer aus der Vielzahl von Nachrichten auf das Vorhandensein mindestens eines Merkmals, das mit den ersten Filterkriterien verknüpft ist, wobei jedes der mindestens einen Merkmale ein Token und/oder eine heuristische Regel ist;
   Berechnen einer Wahrscheinlichkeit dafür, dass mindestens eine aus der Vielzahl von Nachrichten Spam ist, basierend auf dem Vorhandensein von mindestens einem der mindestens einen Merkmale; und
   Vergleichen der Wahrscheinlichkeit mit einem vorbestimmten Schwellwert.

8. Verfahren nach Anspruch 7, wobei das Überprüfen von mindestens einer aus der Vielzahl von Nachrichten auf das Vorhandensein einer heuristischen Regel das Finden von mindestens einer Zeichenfolge in mindestens einer der Vielzahl von Nachrichten umfasst.

9. Verfahren nach Anspruch 8, wobei die Zeichenfolge ein Markup-Language-Element ist.

10. Verfahren nach Anspruch 1, wobei das Übertragen das Übertragen von Informationen über jede Nachricht, die die ersten Filterkriterien erfüllt, an eine Mobilstation (300) umfasst.

11. Verfahren nach Anspruch 1, wobei das Verfahren zum Filtern von Nachrichten in einem Kommunikationsnetz (110) dient und wobei das Kommunikationsnetz (110) umfasst:

   ein Universal Mobile Telecommunications System-Netz, oder
   ein General Packet Radio System-Netz.

12. Verfahren nach Anspruch 1, wobei das Empfangen das Empfangen umfasst von:

   einer E-Mail-Nachricht; oder
   einer Multimedia-Messaging-Service-Nachricht.

13. Verfahren nach Anspruch 1, wobei das Empfangen das Empfangen umfasst von:

   der mindestens einen Rückmeldungsnachricht, die die mindestens eine Nachricht umfasst, welche die ersten Filterkriterien erfüllt; oder
   mindestens einen Header von der mindestens einen Nachricht, welche die ersten Filterkriterien erfüllt.

**14.** Nachrichtenserver (320), umfassend:

Speichermittel (322) zum Speichern von ersten Filterkriterien;

Empfangsmittel (328) zum Empfangen einer Vielzahl von Nachrichten;

Bestimmungsmittel (326) zum Bestimmen, ob jede der Vielzahl von Nachrichten die ersten Filterkriterien erfüllt;

Übertragungsmittel (328) zum Übertragen von Informationen über jede Nachricht, die die ersten Filterkriterien erfüllt;

Empfangsmittel (328) zum Empfangen mindestens einer Rückmeldenachricht, die mindestens eine Nachricht angibt, welche die ersten Filterkriterien erfüllt;

Bestimmungsmittel (326) zum Bestimmen zweiter Filterkriterien basierend auf den ersten Filterkriterien und der Rückmeldenachricht; und wobei

die Bestimmungsmittel (326) dazu eingerichtet sind, die zweite Filterung basierend auf der Abwesenheit des Empfangs einer Rückmeldenachricht zu bestimmen, die eine Nachricht angibt, welche die ersten Filterkriterien erfüllt.

**15.** Nachrichtenserver (320) nach Anspruch 14, wobei die Abwesenheit des Empfangs der Rückmeldenachricht, die die Nachricht angibt, welche die ersten Filterkriterien erfüllt, basierend auf der Abwesenheit des Empfangs der Rückmeldenachricht innerhalb einer vorgegebenen Zeitspanne bestimmt wird.

**16.** Nachrichtenserver (320) nach Anspruch 14, wobei die Abwesenheit des Empfangs der Rückmeldenachricht, die die Nachricht identifiziert, welche die ersten Filterkriterien erfüllt, basierend auf der Abwesenheit des Empfangs der Rückmeldenachricht nach einer vorbestimmten Anzahl von Übertragungen von Informationen über Nachrichten bestimmt wird, welche die ersten Filterkriterien erfüllen, für welche keine Rückmeldenachrichten empfangen werden.

**17.** Nachrichtenserver (320) nach Anspruch 14, wobei die Filterkriterien eine Sender-Positivliste umfassen.

**18.** Nachrichtenserver (320) nach Anspruch 14, wobei die Filterkriterien einen statistischen Filter umfassen.

**19.** Nachrichtenserver (320) nach Anspruch 14, wobei der statistische Filter ein Bayes-Klassifikator ist.

**20.** Nachrichtenserver (320) nach Anspruch 18, weiter umfassend:

eine Filtereinheit (324) in dem mindestens einen Nachrichtenserver (320), die eingerichtet ist, zumindest eine aus der Vielzahl von Nachrichten auf das Vorhandensein von mindestens einem Merkmal zu überprüfen, das mit den ersten Filterkriterien verknüpft ist, wobei jedes der mindestens einen Merkmale ein Token und/oder eine heuristische Regel ist, um eine Wahrscheinlichkeit dafür zu berechnen, dass mindestens eine von der Vielzahl von Nachrichten Spam ist, basierend auf dem Vorhandensein von mindestens einem der mindestens einen Merkmale, und die Wahrscheinlichkeit mit einem vorbestimmten Schwellwert zu vergleichen.

**21.** Nachrichtenserver (320) nach Anspruch 20, wobei die Filtereinheit (324) dazu eingerichtet ist, mindestens eine Zeichenfolge in mindestens einer der Vielzahl von Nachrichten zu finden, um das Vorhandensein von mindestens einem der mindestens einen Merkmale zu überprüfen.

**22.** Nachrichtenserver (320) nach Anspruch 21, wobei die mindestens eine Zeichenfolge ein Markup-Language-Element ist.

**23.** Nachrichtenserver (320) nach Anspruch 14, wobei das Übertragungsmittel (328) dazu eingerichtet ist, Informationen über jede Nachricht, die die ersten Filterkriterien erfüllt, an mindestens einen drahtlosen Knotenpunkt (300) zu übertragen.

**24.** Nachrichtenserver (320) nach Anspruch 23, wobei der mindestens eine drahtlose Knotenpunkt (300) eine Mobilstation ist.

**25.** Nachrichtenserver (320) nach Anspruch 14, wobei der Nachrichtenserver (320) zum Filtern von Nachrichten in einem Kommunikationsnetz (100) dient und wobei das Kommunikationsnetz (100) umfasst:

ein Universal Mobile Telecommunications Systems-Netz, oder
ein General Packet Radio Systems-Netz.

**26.** Nachrichtenserver (320) nach Anspruch 14, wobei mindestens eine der Vielzahl von Nachrichten
eine E-Mail-Nachricht, oder
eine Multimedia-Messaging-Service-Nachricht ist.

**27.** Nachrichtenserver (320) nach Anspruch 14, wobei die mindestens eine Rückmeldenachricht die mindestens eine Nachricht umfasst, welche die ersten Filterkriterien erfüllt.

**28.** Nachrichtenserver (320) nach Anspruch 14, wobei die mindestens eine Rückmeldenachricht mindestens einen Header von der mindestens einen Nachricht umfasst, welche die ersten Filterkriterien erfüllt.

**29.** Computerprogramm, gespeichert auf einem computerlesbaren Medium, umfassend Code, der eingerichtet ist, alle Verfahrensschritte nach einem der Ansprüche 1 bis 13 durchzuführen, wenn er auf einem Datenverarbeitungssystem (320) ausgeführt wird.

**30.** Computerprogramm nach Anspruch 29, wobei das computerlesbare Medium
eine entfernbare Speicherkarte, oder
eine magnetische oder optische Platte ist.

**31.** Kommunikationsnetz umfassend:

einen Nachrichtenserver (320) nach einem der Ansprüche 14 bis 28 und mindestens einen drahtlosen Knotenpunkt (110).

**32.** Kommunikationsnetz nach Anspruch 31, umfassend einen Nachrichtenclient (330) in dem mindestens einen drahtlosen Knotenpunkt (110), der eingerichtet ist, von einer Nachrichteneinheit (326) des Nachrichtenservers (320) Informationen über jede Nachricht abzurufen, die die ersten Filterkriterien erfüllt, um einem Benutzer zu ermöglichen, zu bestimmen, ob die mindestens eine Nachricht, welche die ersten Filterkriterien erfüllt, Spam ist, und die mindestens eine Rückmeldenachricht an die Nachrichteneinheit (326) bereitzustellen.

**Revendications**

**1.** Procédé comprenant :

le stockage de premiers critères de filtrage dans au moins un serveur de messagerie (320) ;
la réception d'une pluralité de messages dudit au moins un serveur de messagerie (320) ;
la détermination si chacun de ladite pluralité de messages passe lesdits premiers critères de filtrage dans ledit au moins un serveur de messagerie (320) ;
la transmission d'informations sur chaque message passant lesdits premiers critères de filtrage ;
la réception d'au moins un message de rétroaction identifiant au moins un message passant lesdits premiers critères de filtrage au dit au moins un serveur de messagerie (320) ;
la détermination de deuxièmes critères de filtrage sur la base desdits premiers critères de filtrage et dudit message de rétroaction ; et en outre
la détermination desdits deuxièmes critères de filtrage sur la base d'une absence de réception d'un message de rétroaction identifiant un message passant lesdits premiers critères de filtrage.

**2.** Procédé selon la revendication 1, dans lequel ladite absence de réception dudit message de rétroaction identifiant ledit message passant lesdits premiers critères de filtrage est déterminée sur la base d'une absence de réception dudit message de rétroaction au cours d'une période de temps donnée.

**3.** Procédé selon la revendication 1, dans lequel ladite absence de réception dudit message de rétroaction identifiant ledit message passant lesdits premiers critères de filtrage est déterminée sur la base d'une absence de réception dudit message de rétroaction à la suite d'un nombre prédéterminé de transmissions d'informations sur des messages passant lesdits premiers critères de filtrage pour lesquels aucun message de rétroaction n'est reçu.

**4.** Procédé selon la revendication 1, dans lequel ladite détermination des deuxièmes critères de filtrage comprend la détermination d'une liste blanche d'expéditeurs dans l'au moins un serveur de messagerie (320).

**5.** Procédé selon la revendication 1, dans lequel ledit stockage comprend le stockage d'un filtre statistique dans l'au moins un serveur de messagerie (320).

**6.** Procédé selon la revendication 5, dans lequel ledit filtre statistique comprend un classificateur bayésien.

**7.** Procédé selon la revendication 5, le procédé comprenant en outre :

le contrôle d'au moins l'un de ladite pluralité de messages à la recherche de la présence d'au moins une caractéristique associée aux dits premiers critères de filtrage, chacune de ladite au moins une caractéristique étant au moins l'un d'un jeton et d'une règle heuristique ;
le calcul d'une probabilité qu'au moins l'un de ladite pluralité de messages soit un message indésirable sur la base de la présence d'au moins l'une de ladite au moins une caractéristique ; et
la comparaison de ladite probabilité à une valeur de seuil prédéfinie.

**8.** Procédé selon la revendication 7, dans lequel ledit contrôle d'au moins l'un de ladite pluralité de messages à la recherche de la présence d'une règle heuristique comprend la découverte d'au moins une séquence de caractères dans au moins l'un de ladite pluralité de messages.

**9.** Procédé selon la revendication 8, dans lequel ladite séquence de caractères est un élément de langage de balisage.

**10.** Procédé selon la revendication 1, dans lequel ladite transmission comprend la transmission d'informations sur chaque message passant lesdits premiers critères de filtrage à une station mobile (300).

**11.** Procédé selon la revendication 1, dans lequel le procédé est destiné à filtrer des messages dans un réseau de communication (110) et dans lequel ledit réseau de communication (110) comprend :

un réseau de système de télécommunication mobile universel, UMTS, ou
un réseau de système de transmission radio par paquet général, GPRS.

**12.** Procédé selon la revendication 1, dans lequel ladite réception comprend la réception de :

un message de courrier électronique, ou
un message de service de messagerie multimédia, SMS.

**13.** Procédé selon la revendication 1, dans lequel ladite réception comprend la réception de :

au moins un message de rétroaction comprenant ledit au moins un message passant lesdits premiers critères de filtrage, ou
au moins un en-tête dudit au moins un message passant lesdits premiers critères de filtrage.

**14.** Serveur de messagerie (320), comprenant :

un moyen de stockage (322) pour le stockage de premiers critères de filtrage ;
un moyen de réception (328) pour la réception d'une pluralité de messages ;
un moyen de détermination (326) pour la détermination si chacun de ladite pluralité de messages passe lesdits premiers critères de filtrage ;
un moyen de transmission (328) pour la transmission d'informations sur chaque message passant lesdits premiers critères de filtrage ;
un moyen de réception (328) pour la réception d'au moins un message de rétroaction identifiant au moins un message passant lesdits premiers critères de filtrage ;
un moyen de détermination (326) pour la détermination de deuxièmes critères de filtrage sur la base desdits premiers critères de filtrage et dudit message de rétroaction ; et dans lequel
ledit moyen de détermination (326) est configuré pour la détermination desdits deuxièmes critères de filtrage sur la base d'une absence de réception d'un message de rétroaction identifiant un message passant lesdits premiers critères de filtrage.

**15.** Serveur de messagerie (320) selon la revendication 14, dans lequel ladite absence de réception dudit message de rétroaction identifiant ledit message passant lesdits premiers critères de filtrage est déterminée sur la base d'une absence de réception dudit message de rétroaction au cours d'une période de temps donnée.

16. Serveur de messagerie (320) selon la revendication 14, dans lequel ladite absence de réception dudit message de rétroaction identifiant ledit message passant lesdits premiers critères de filtrage est déterminée sur la base d'une absence de réception dudit message de rétroaction à la suite d'un nombre prédéterminé de transmissions d'informations sur des messages passant lesdits premiers critères de filtrage pour lesquels aucun message de rétroaction n'est reçu.

17. Serveur de messagerie (320) selon la revendication 14, dans lequel lesdits critères de filtrage comprennent une liste blanche d'expéditeurs.

18. Serveur de messagerie (320) selon la revendication 14, dans lequel lesdits critères de filtrage comprennent un filtre statistique.

19. Serveur de messagerie (320) selon la revendication 14, dans lequel ledit filtre statistique comprend un classificateur bayésien.

20. Serveur de messagerie (320) selon la revendication 18, comprenant en outre :

une entité de filtrage (324) dans ledit au moins un serveur de messagerie (320) configurée pour le contrôle d'au moins l'un de ladite pluralité de messages à la recherche de la présence d'au moins une caractéristique associée aux dits premiers critères de filtrage, chacune de ladite au moins une caractéristique étant au moins l'un d'un jeton et d'une règle heuristique, pour le calcul d'une probabilité qu'au moins l'un de ladite pluralité de messages soit un message indésirable sur la base de la présence d'au moins l'une de ladite au moins une caractéristique, et pour la comparaison de ladite probabilité à une valeur de seuil prédéfinie.

21. Serveur de messagerie (320) selon la revendication 20, dans lequel ladite entité de filtrage (324) est configurée pour la découverte d'au moins une séquence de caractères dans au moins l'un de ladite pluralité de messages pour le contrôle de la présence d'au moins l'une de ladite au moins une caractéristique.

22. Serveur de messagerie (320) selon la revendication 21, dans lequel ladite au moins une séquence de caractères est un élément de langage de balisage.

23. Serveur de messagerie (320) selon la revendication 14, dans lequel ledit moyen de transmission (328) est configuré pour la transmission d'informations sur chaque message passant lesdits premiers critères de filtrage à au moins un noeud sans fil (300).

24. Serveur de messagerie (320) selon la revendication 23, dans lequel l'au moins un noeud sans fil (300) est une station mobile.

25. Serveur de messagerie (320) selon la revendication 14, dans lequel le serveur de messagerie (320) est destiné à filtrer des messages dans un réseau de communication (100) et dans lequel ledit réseau de communication (110) comprend :

un réseau de système de télécommunication mobile universel, UMTS, ou
un réseau de système de transmission radio par paquet général, GPRS.

26. Serveur de messagerie (320) selon la revendication 14, dans lequel au moins l'un de ladite pluralité de messages est :

un message de courrier électronique, ou
un message de service de messagerie multimédia, SMS.

27. Serveur de messagerie (320) selon la revendication 14, dans lequel ledit au moins un message de rétroaction comprend ledit au moins un message passant lesdits premiers critères de filtrage.

28. Serveur de messagerie (320) selon la revendication 14, dans lequel ledit au moins un message de rétroaction comprend au moins un en-tête dudit au moins un message passant lesdits premiers critères de filtrage.

**29.** Programme informatique stocké sur un support lisible par ordinateur comprenant un code configuré pour effectuer, lorsqu'il est exécuté sur un système de traitement de données (320), toutes les étapes du procédé selon l'une quelconque des revendications 1 à 13.

**30.** Programme informatique selon la revendication 29, dans lequel le support lisible par ordinateur est :

une carte mémoire amovible, ou
un disque magnétique ou optique.

**31.** Réseau de communication comprenant :

un serveur de messagerie (320) selon l'une quelconque des revendications 14 à 28 et au moins un noeud sans fil (110).

**32.** Réseau de communication selon la revendication 31, comprenant un client de messagerie (330) dans ledit au moins un noeud sans fil (110) configuré pour extraire des informations sur chaque dit message passant lesdits premiers critères de filtrage à partir d'une entité de messagerie (326) du serveur de messagerie (320), pour permettre à un utilisateur de déterminer si ledit au moins un message passant lesdits premiers critères de filtrage est un message indésirable, et pour fournir ledit au moins un message de rétroaction à ladite entité de messagerie (326).

FIG. 1 (PRIOR ART)

FIG. 2 (PRIOR ART)

SPAMMER

Internet

140

301  306

130

MSG
SERVER

326  324

302

322

320

328
304

305

303

112

330  332

110

334

MT

300

FIG. 3

400

USER DATA

X

FEATURE VECTOR

$X_1$

TOKEN 1

TSP    TNONSP    T

$X_k$

TOKEN k

$X_{k+1}$

RULE 1

$X_n$

RULE m

402

WHITELIST

410

ADDRESS 1

412

ADDRESS j

404

USER ID

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040167964 A
- EP 1326189 A
- US 20030204568 A
- US 20030153302 A
- EP 1139608 A
- US 6554787 B
- US 20030224760 A
- WO 2004071035 A
- US 20040019651 A